# EUROPEAN PATENT SPECIFICATION

(11) **EP 1 864 701 B1**
(45) Date of publication and mention of the grant of the patent: **21.05.2014**
(21) Application number: 06729938.8
(22) Date of filing: 24.03.2006
(51) Int. Cl.: A63F 13/493, A63F 13/70, A63F 13/75

(54) **GAME DEVICE, AND FRAUD DETECTING METHOD FOR THE GAME DEVICE**
SPIELVORRICHTUNG UND BETRUGSERFASSUNGSVERFAHREN FÜR DIE SPIELVORRICHTUNG
DISPOSITIF DE JEU ET METHODE DE DETECTION DE FRAUDE POUR LE DISPOSITIF DE JEU

(30) Priority: 31.03.2005 JP 2005100375
(43) Date of publication of application: 12.12.2007
(73) Proprietor: SEGA CORPORATION, Tokyo 144-8531 (JP)
(72) Inventor: MOTOTANI, Shigeru, c/o SEGA CORPORATION, Tokyo 1448531 (JP); FURUHASHI, Shinichi, c/o SEGA CORPORATION, Tokyo 1448531 (JP); SHIMIZU, Yusuke, c/o SEGA CORPORATION, Tokyo 1448531 (JP)
(74) Representative: Haseltine Lake LLP
(86) International application number: PCT/JP2006/305990
(87) International publication number: WO 2006/109530

(56) References cited:
- JP-A- 06 335 560
- JP-A- 63 182 451
- JP-A- 2001 327 712
- JP-A- 2001 327 712
- JP-A- 2002 282 409
- JP-A- 2003 271 909
- JP-A- 2003 271 909
- ERIC CRONIN ET AL: "An Efficient Synchronization Mechanism for Mirrored Game Architectures" PROCEEDINGS OF WORKSHOP ON NETWORK AND SYSTEM SUPPORT FOR GAMES.NETGAMES, XX, XX, vol. 23, no. 1, 1 April 2004 (2004-04-01), pages 7-30, XP002343008

## Description

### TECHNICAL FIELD

The present invention relates to an irregular use detection method for a game machine, and a game machine to which the method is applied.

### BACKGROUND ART

Recently the arcade game contents playable for game machines installed in game centers that have a plurality of game machines have become advanced and complicated, and the game machines are constructed so as to have specifications to support these games.

For example, game machines have a configuration to record information on a player who plays a game (e.g. game achievement record in past) on an IC card or data base (DB) server.

Because of this, in some cases a player who is serious about their game achievement record may intentionally shut the power of the game machine OFF before the game achievement result is recorded when the loss of a game seems certain.

On the other hand, programs to be executed by the game machine become complicated as games advance, and unexpected hang-ups may occur. In this case, the store operator managing the game machines turns the power of the game machine OFF once, then ON again to restart it.

In both cases, continuation of the game execution is disabled once. Therefore it is important to identify whether the cause of discontinuation of the execution of the game is an intentional power disconnection by a player, or a hang up of the system for which the player is not responsible.

In other words, the cause of disconnection of the power supply when the program is operating normally could be the intention or error of the player, but when an unexpected hang up occurs, the player information must be preserved so that the player does not experience a disadvantage.

In Japanese Patent Application Laid-Open No. 2001-327712 (see paragraph [0003] and [0096]), referred to as Patent Document 1 here, an invention to prevent the loss of payout information at power failure, which occurred paying out winnings based on winning pachinko balls on a pachinko machine, is disclosed. The invention according to this Patent Document 1 is a pachinko machine having a main side control unit and a sub-side control unit, each of which stores a value (the number of winning pachinko balls paid out) counted during payout in a recording section respectively, and when main power is recovered, information on one of the recording sections of the main side and sub-side is read, and the payout device is driven and controlled based on the payout information before the power failure.

In Japanese Patent Application Laid-Open No. 2003-271909 (see paragraph [0015]), referred to as Patent Document 2 here, an invention of writing a same count value in three nonvolatile memories, comparing the data of these memories when power is turned ON, and judging the correct data based on a majority decision, is disclosed.

The inventions according to Patent Documents 1 and 2 are both for acquiring correct information without errors of numeric values due to a power failure, by comparing the information recorded in a plurality of recording sections.

However, neither documents state a concept of searching for the cause of the disconnection of power of the system, and controlling subsequent processing according to this cause.

The Document "An efficient synchronisation mechanism for mirrored game architectures" by Cronin, Filstrup, Kurc and Jamin discloses command synchronisation in order to prevent cheating amongst a plurality of client devices.

Patent Document 3 (JP-2003-271909) discloses a system with a plurality of memories and detects and irregular finish based on a comparison between counter values stored in the different memories written to by a CPU.

In particular, nothing is stated about the power OFF caused by an irregular action of a player, and how to maintain player information when the game is restarted there after.

### DISCLOSURE OF THE INVENTION

With the foregoing in view, it is an object of the present invention to provide an irregular use detection method for a game machine, which can easily detect the cause of restarting the game machine and can switch the maintenance level of the player information based on the reason for the restart, and a game machine system that uses this irregular use detection method.

The invention is carried out as in claims 1-10.

Because of the above characteristics of the present invention, it can easily be judged whether the cause of a restart is an intentional irregular action of a player or an unexpected hang up of the system. As a result, maintenance processing of player information at restart can be more appropriately performed.

If the cause of a restart is an intentional irregular action of a player, the player information is set so as to be a disadvantage for the player who committed this irregular action, thereby fairness to other players participating in a network game is insured, and enthusiasm to participate in the game is not diminished.

The characteristics of the present invention will be further clarified by the embodiments of the invention, which will be described below with reference to the drawings.

### BRIEF DESCRIPTION OF THE DRAWINGS

Fig. 1 is a diagram depicting a configuration example of a game machine to which the present invention is applied;
Fig. 2A to 2C are diagrams depicting the relationship of the first memory area and the second memory area;
Fig. 3A to 3C are diagrams depicting the method for comparing the life count and the copy count;
Fig. 4 is a diagram depicting the relationship between the life count and the copy count according to the present invention;
Fig. 5 is a diagram depicting the state of the count value when the power switch 5 is turned OFF by an intentional irregular action of a player in comparison with Fig. 4;
Fig. 6 is a table to show that a previous startup state can be known by the count state;
Fig. 7 is a table showing an example when the data to be written in a nonvolatile memory is triplexed;
Fig. 8 is a table showing areas of the nonvolatile memory corresponding to the triplexing in Fig. 7;
Fig. 9 is a diagram depicting the configuration example of the game machine system assuming the case when a game is played among game machines in a plurality of arcades via a network;
Fig. 10 is a diagram depicting the general flow of the game machine system;
Fig. 11 shows an example of play data recorded in the nonvolatile memory 11 dedicated to the main CPU 10;
Fig. 12 is a diagram depicting one method for initializing the system;
Fig. 13 is a diagram depicting a flow of another method of synchronization processing (step S80) in Fig. 12; and
Fig. 14 is a diagram depicting a flow of another method of synchronization processing (step S80) in Fig. 12.

### BEST MODE FOR CARRYING OUT THE INVENTION

Embodiments of the present invention will now be described with reference to the drawings. The embodiments are for assisting in understanding the present invention, and do not limit the technical scope of the present invention.

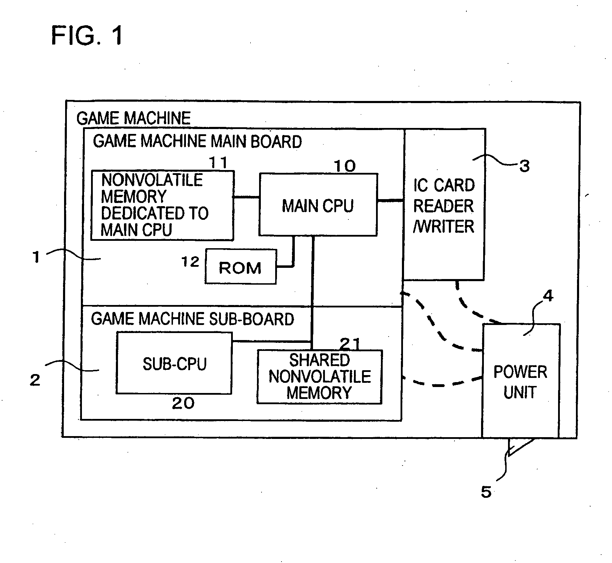

Fig. 1 is a configuration example of a game machine to which the present invention is applied.

The game machine has a game machine main board 1, game machine sub-board 2, IC card reader/writer 3, and a power unit 4. The power unit 4 has a power switch 5 which can be operated from outside the machine.

The game machine main board 1 has a main CPU 10 and a ROM 12 storing BIOS and the game programs. The game machine main board 1 also has a nonvolatile memory 11 dedicated to the main CPU, where the main CPU 11 reads/writes information during game execution. The main CPU 10 starts up the system by turning the power switch 5 ON, and executing BIOS. When the system is started, an IC card of the player can be inserted into the IC card reader/writer 3.

When an IC card is inserted into the IC card reader/writer 3, the main CPU 10 reads the card information of the IC card, and authenticates the player. If the player passes authentication, the CPU 10 can start the game program.

The game machine sub-board 2, on the other hand, has a sub-CPU 20 and a shared nonvolatile memory 21, which is shared with the game machine main board 1. The game machine sub-board 2 functions primarily as an I/O equipment interface, such as for a joystick, and sound amplifier. The game machine sub-board 2 is started up by turning the power switch 5 ON, just like the game machine main board 1.

In Fig. 1, the sub-CPU 20 of the game machine sub-board 2 has a count function, which is a characteristic of the present invention. When the game machine is started up by turning the power ON, counting is started by this count function, and counting continues until power is shut OFF in the progressing process of the game program, including the final storage of the game result data. And the count value after being counted is stored in the first memory area of the shared nonvolatile memory 21.

For this count function, it is possible to handle the time change by a clock function in the same way as the counter function, and the main CPU 10 of the game machine main board 1 records a count value acquired based on the count value counted by the count function of the sub-CPU 20. An independent nonvolatile memory may be provided to store this count value, and is used as the second nonvolatile memory area, but it is preferable to store the count value in a second nonvolatile memory area in the shared nonvolatile memory 21 in the game machine sub-board 2.

In the following description, a count value counted by the count function of the sub-CPU 20 is called a "life count", and a count value acquired by the main CPU 10 based on this life count is called a "copy count".

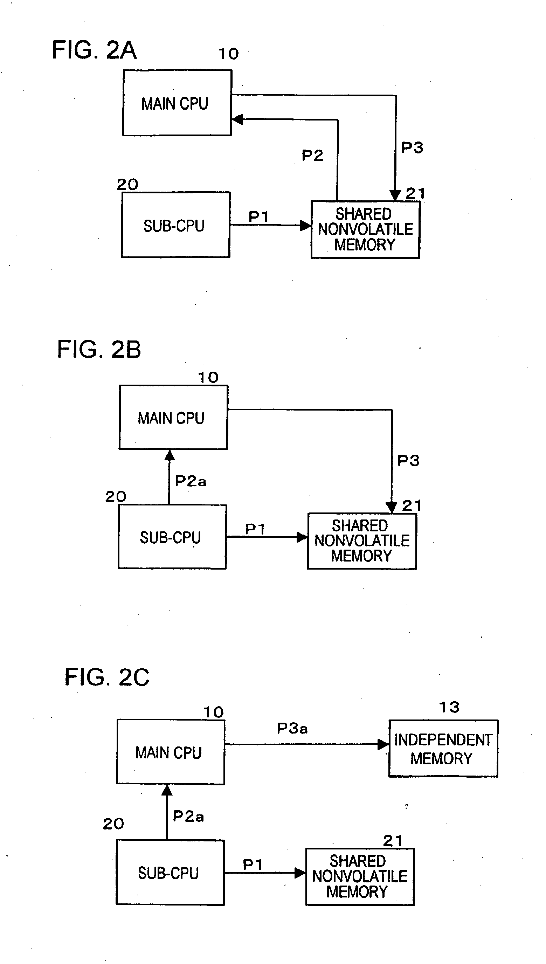

Fig. 2A to 2C shows an example of the relationship between the first memory area and the second memory area.

In Fig. 2A to 2C, Fig. 2A shows a mode where a life count is stored in a first nonvolatile memory area of the shared nonvolatile memory 21 (step P1), and for the copy count, the main CPU 10 reads the life count (step P2), and copies it to a second nonvolatile memory area of the shared nonvolatile memory 21 (step P3).

Fig. 2B shows a mode where a life count is stored in a first nonvolatile memory area of the shared nonvolatile memory 21 (step P1), and is simultaneously notified to the main CPU 10 (step P2a). Then the main CPU 10 stores the notified life count in a second nonvolatile memory area of the shared nonvolatile memory 21 (step P3).

Fig. 2C shows a mode where an independent memory 13 is provided in the game machine main board 1, and a life count is stored in a first nonvolatile memory area of the shared nonvolatile memory 21 (step P1), and is simultaneously notified to the main CPU 10 (step P2a). Then the main CPU 10 stores the notified life count in the independent nonvolatile memory 13 as a second nonvolatile memory area, and acquires a copy count (step P3a).

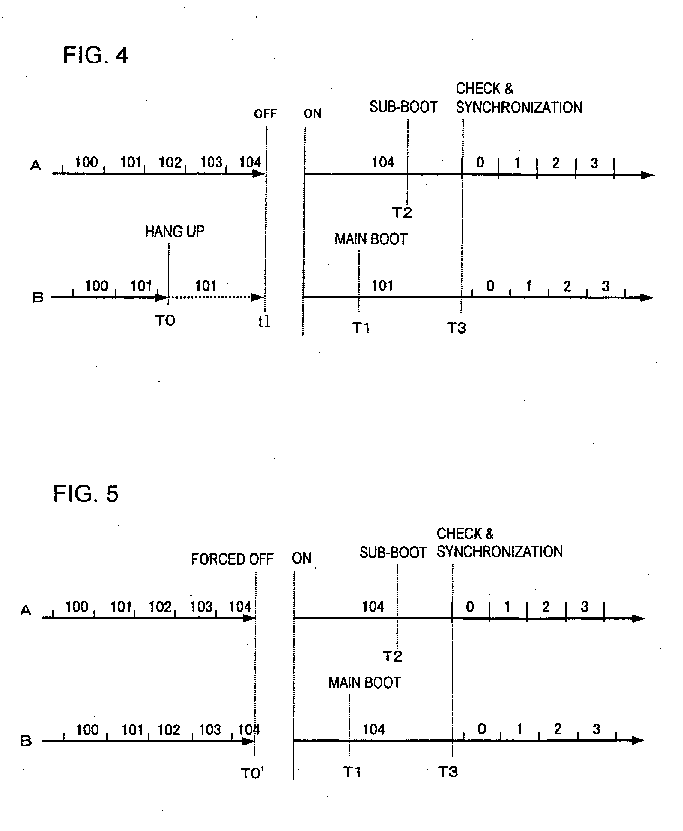

Fig. 4 is a diagram depicting a life count and a copy count that the main CPU 10 acquires based on this life count in this configuration, according to the present invention, and this is the case showing that the cause of a restart is a hang up of the main CPU 10.

In Fig. 4, "A" is a life count and is incremented by "1" each second while the power is ON, as an example. The life count to be incremented is stored in the first nonvolatile memory area of the shared nonvolatile memory 21.

"B" is a copy count acquired by the main CPU 10 according to one of the methods described in Fig. 2A to 2C. The copy count, which is acquired by the acquisition processing of the main CPU 10 based on the life count by the sub-CPU 20, appears with a delay, as shown in Fig. 4.

The example in Fig. 4 shows the state when the main CPU 10 hangs up at time T0. Therefore the copy count acquired by the main CPU 10 stops at "101".

An arcade operator who recognizes this hang up state operates the power switch 5 of the game machine, and shuts the power OFF (t1). At this time, the copy count acquired by the main CPU 10 stops at "101", but in the sub-CPU 20, to which power is continuously supplied after the main CPU 10 hangs up until the power switch 5 is turned OFF, the value of the life count is incremented.

This generates a difference between the life count value and the copy count value counted by the main CPU 10 and the sub-CPU 20 until the power switch 5 is turned OFF. It can be expected that the difference of the count values of one or more will be generated by the time the arcade operator detects the hang up state of the CPU 10 and shuts the power switch 5 OFF if the life count is incremented by "1" each second. In other words, in the case of the example in Fig. 4, the life count is "104" at time t1 when the power switch 5 is turned OFF, and the value of the copy count at hang up is "101". Therefore the difference "3" is generated between these count values.

When the arcade operators turns the power switch 5 ON again, the game machine main board 1 and the sub-board 2 are restarted at times T1 ant T2 respectively, as described in Fig. 1. When the game machine main board 1 and the game machine sub-board 2 complete restart respectively, the main CPU 1 compares the counts stored in the first and second nonvolatile memory areas at time T3 according to the game program.

In the above description, the count values stored in the first and second nonvolatile memory areas are compared by the CPU 1 as the first control unit. In the present invention, however, application is not limited to this. In other words, the CPU 20 may read the count value and the copy count value from the shared nonvolatile memory 21 by the CPU 20 as the second control unit, as shown in Fig. 2A and Fig. 2B, or the copy count value may be read from the independent memory 13 if the copy count value is stored in the independent memory 13, as shown in Fig. 2C, to compare each value.

In any case, however, the comparison result must be transferred to the main CPU 10.

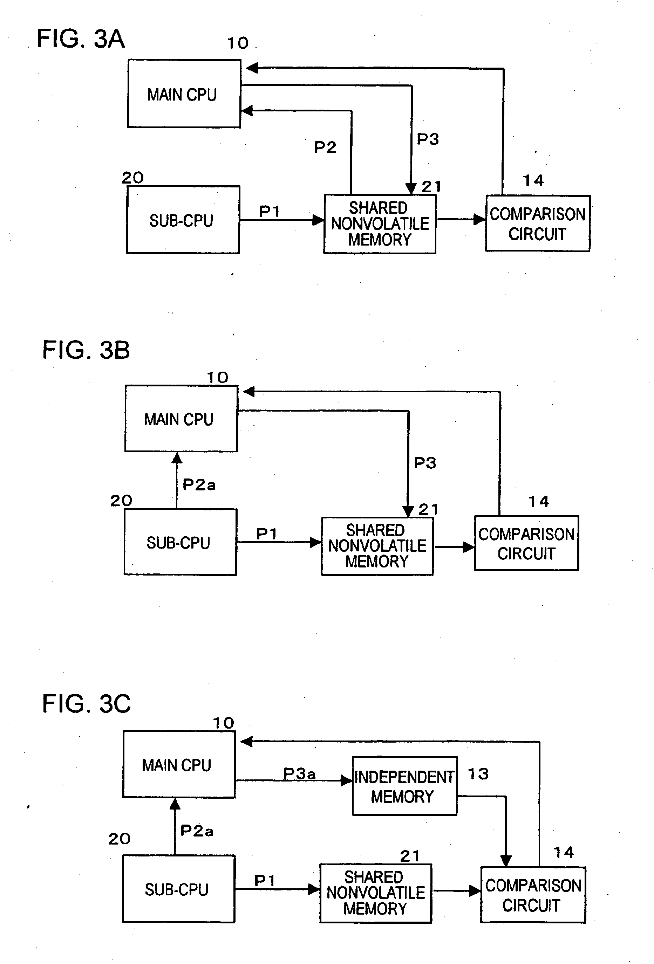

As another mode, an independent comparison circuit 14 may be disposed, as shown in Fig. 3A to 3C, so as to compare the count value and the copy count value. Fig. 3A, Fig. 3B and Fig. 3C in Fig. 3, correspond to Fig. 2A, Fig. 2B and Fig. 2C respectively. In other words, in the mode shown in Fig. 3A and Fig. 3B, the comparison circuit 14 reads a count value and a copy count value from the shared nonvolatile memory 21, and compares these values. The result is transferred to the main CPU 1.

In the mode shown in Fig. 3C, the comparison circuit 14 reads the count value from the shared nonvolatile memory 21 and the copy count value from the independent memory 13, and compares these values. The result must also be transferred to the main CPU 1.

In this comparison of count values, it is judged that if the difference between the lift count which is the first count value, and the copy count which is the second count value, is a predetermined value or more (e.g. two or more), the previous state where the power was shut OFF (previous startup state) is a state where the main CPU 1 was hung up during execution of a program, and no irregular action was committed by players. Therefore the life count and the copy count are reset.

Application of the present invention was not limited to a method for directly judging the difference when the life count and the copy count are compared, as described above. In other words, the life count value and the copy count value may be set to have a predetermined relationship when the game program is progressing normally, so that whether this predetermined relationship is maintained or not is judged when the life count and the copy count are compared. If the life count value and the copy count value are in the predetermined relationship as a result of comparison, it is judged that irregular action was not committed by players.

The predetermined relationship refers, for example, to an arithmetic progression, a geometric progression or to a certain relationship to be formed between values before and after conversion using a predetermined function.

Then incrementing of the life count and acquisition of the copy count by the main CPU 10 are restarted, and also execution of the game program is restarted.

If the power switch 5 is intentionally turned OFF by an irregular action of a player, on the other hand, incrementing of the counter by the sub-CPU 20 stops immediately. Also the main CPU 10 does not copy the life count. Therefore, in this case, the first count value stored in the first nonvolatile memory area and the second count value stored in the second nonvolatile memory area are the same, or do not maintain the above mentioned predetermined relationship.

Fig. 5 is a diagram depicting the state of the count values when the power switch 5 is turned OFF by an intentional irregular action of a player, in comparison with Fig. 4.

In Fig. 5, if the switch 5 is forcibly turned OFF by an intentional irregular action of a player at timing T0', the first and second counter values become the same, "104" for example. Therefore when the arcade operator or a player turns the power switch 5 ON, the game machine main board 1 and the game machine sub-board 2 are restarted at times T1 and T2 respectively. When the game machine main board 1 and the game machine sub-board 2 complete restart respectively, the main CPU 1 compares the first and second count values stored in the first and second nonvolatile memory areas according to the game program at time T3.

In this comparison of count values, the life count which is the first count value, and the copy count which is the second count value, have no difference, but are identical. Therefore the main CPU 1 judges that the previous state where power is shut OFF is due to an irregular action of a player.

Various processings are possible after judging that the cause is an irregular action of the player. For example, a record of irregular action is stored in the IC card inserted by a player, so that subsequent participation of this player in a network game is disabled. Or the achievement level in a network game is set to the lowest rank.

In any case, a disadvantage is given to the player who intentionally shut the system OFF, therefore fairness to other players is insured.

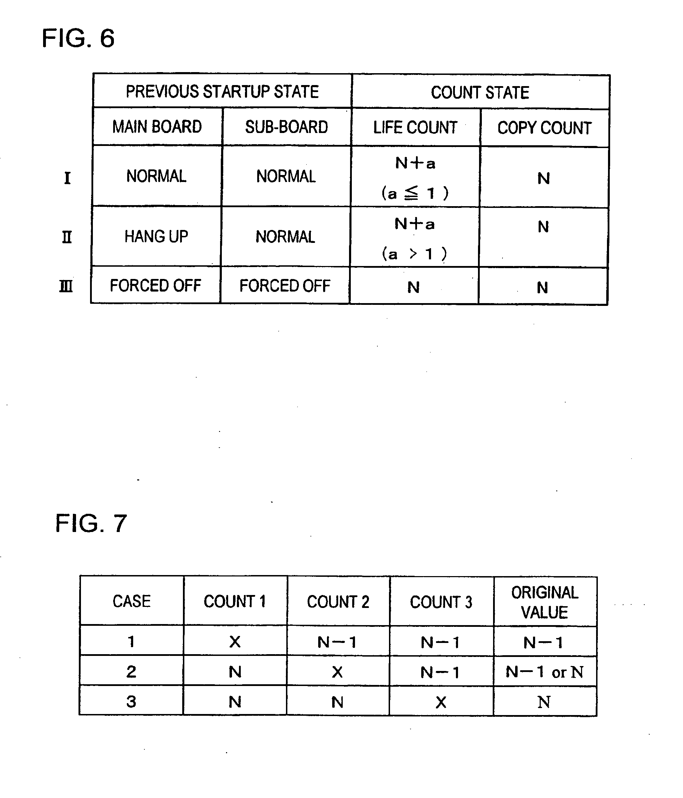

Fig. 6 is a table summarizing the above modes. The previous startup state can be known by the count state shown in this table.

In the table in Fig. 6, "I" is a state where the system restarted during normal operation. At most a difference of "1" or less could be generated, depending on the timing of copying the life count. "II" is a state where the game machine main board 1 was hung up, and life count could not be copied. "III" is a state where the life count and the copy count end with the same value. This case shows that the power switch 5 was turned OFF by an intentional irregular action of a player, and the sub-board 2 could not increment the life count.

In both cases of restarting the system during normal operation and shutting OFF the power switch by an irregular action of a player, the life count and the copy count could either be the same or have a difference of "1" or less. "I" and "III" therefore cannot be distinguished merely by the life count and the copy count.

Restart in normal operation is performed when the game is not progressing (e.g. during an advertisement), so a flag to indicate whether it is during a game or not is stored in the nonvolatile memory separately from these counters, and this information is referred to at start up, so that "I" and "III" can be distinguished.

Or whether it is during a game or not can be distinguished by fixing the value to a predetermined value (e.g. 0) without incrementing the life count and the copy count during an advertisement. If it is assumed that the main game board 1 side is normal and the sub-game board 2 side is hung up, the values of the life count and the copy count become the same in theory. However it is rare that the game machine sub-board 2 hangs up, so it is unlikely that this will occur. Therefore it can be concluded that the state in III in Fig. 6 occurred because of a player forcibly shutting power OFF by an irregular action in the previous start up state.

In the above description, the life count and the copy count are stored in the nonvolatile memory, but it is possible that an undefined value be written when power is turned OFF when writing to the nonvolatile memory. To avoid this problem, as an extension of the present invention, the life count and the copy count are multiplexed.

Fig. 7 is an example when the data to be written to the nonvolatile memory is triplexed.

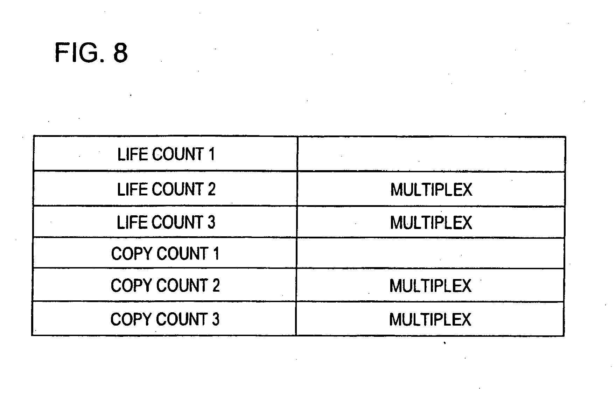

Fig. 8 shows areas in the shared nonvolatile memory 21 corresponding to this triplexing, where three areas for multiplexing are secured for the life count and the copy count respectively. In other words, a same count value is written in different areas in the sequence of count 1, count 2 and count 3, so as to triplex the data.

In the table in Fig. 7, N is a value which is about to be written now, and N-1 is a value which was written a previous time. X is an arbitrary value, and in a normal operation state X is N or N-1. If the power is shut OFF when writing to the nonvolatile memory, an unexpected value is written.

A possible method to determine original data from triplexed data being written is a "majority decision".

In this method, accessing the memory twice or more times from when power is shut OFF to a complete stop is unlikely to occur. In the case of case 2 in Fig. 7, however, a failure occurs when X is neither N nor N-1. With this problem in view, the present invention decides the original value as follows.
(1) If 2 or more values, out of counts 1 to 3, are identical, this identical value is judged as the original value of triplexing (see cases 1 and 3).
(2) If (1) is not established and if the difference between count 3 and count 1 is "1", then count 3 or count 1 is judged as the original value of triplexing (see case 2).

In the case of (2), which one of count 3 or count 1 to be used as the original value is not a critical issue. In order to more closely detect a restart when the game machine main board 1 did not hang up, a smaller value, count 1, is regarded as the original value of the life count, and a greater value, count 3, is regarded as the original value of the copy count in case 2.

Now the environment where the game machine shown in Fig. 1 is installed will be described. The present invention will be particularly significant when it is applied to the case when a plurality of players play a game simultaneously, or at different times and from different locations.

Therefore the present invention can be applied in the same way when a plurality of game machines are used to play a game at one arcade, or when a plurality of game machines in a plurality of arcades are used to play a game via a network. In any case, each game machine has a basic configuration shown in Fig. 1.

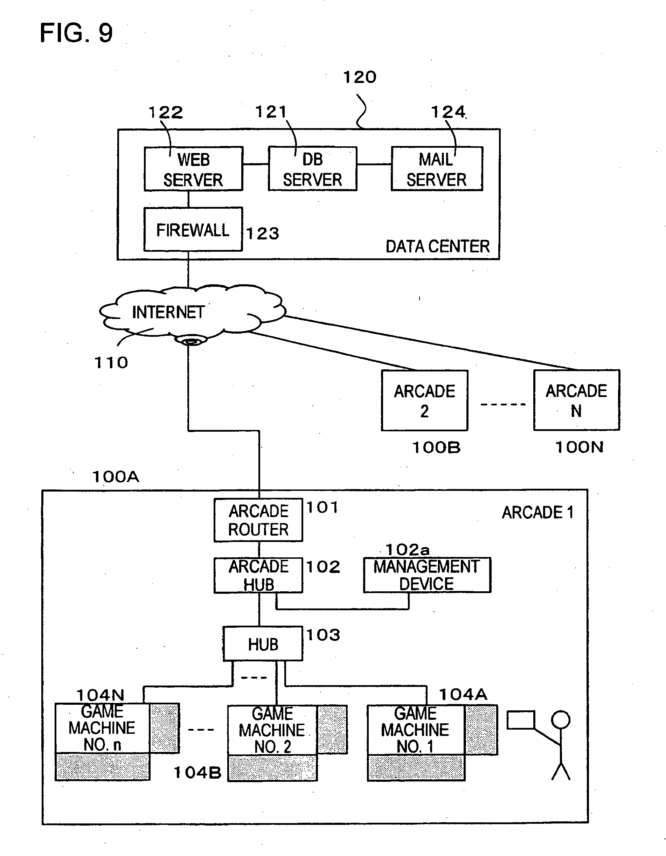

Fig. 9 is a configuration example of a game machine system assuming that game machines in a plurality of arcades are used to play a game via a network.

A plurality of arcades 100A, 100B - - - 100N are connected to a data center 120 via the Internet 110 as a network. The data center 120 has a data base server 121 and stores information on players participating in games by each game title.

A Web server 122 sends player information in a data base server 121 via a firewall 123 and Internet 110 to each arcade, and collects game execution results from each arcade, and sends it to the data base server 121.

The data center 120 also has a mail server 124 so as to send player information to a terminal of a registered user (player).

The arcades 100A, 100B to 100N are connected to the Internet 110 via an arcade router 101 respectively. An arcade management device 102a is connected via an arcade hub 102, and a plurality of game machines 104A to 104N are connected via a hub 103. The configuration of each of the plurality of game machines 104A to 104N is the same as the configuration shown in Fig. 1.

The arcade management device 102a has a function to manage the power OFF of a game machine and the users. The function to manage power OFF of a game machine and the users may be assigned to the data center 120. Here managing the users refers to controlling how game play is handled, including the rejection of a game continuation for a player who committed an irregular action.

If an irregular action is taken in one game machine at an arcade and the power of the game machine is shut OFF, the arcade management device 102a acquires and manages information on the player who committed this irregular action. Therefore even if the player who committed the irregular action attempts to continue the game on another game machine in the arcade, execution of the game can be rejected if this player is judged as a player who committed an irregular action before, as a result of player authentication. Or by assigning a predetermined handicap for game execution, fairness to other players can be insured.

If the arcade management device 102a registers the acquired information on the player who committed an irregular action in the data base server 121 of the data center 120, then even if the player who committed the irregular action attempts to execute the game on another game machine of another arcade, the game execution can be rejected, or a predetermined handicap can be assigned to game execution.

Now the actual flow of game processing when the configuration based on the present invention is applied to this game machine system will be described.

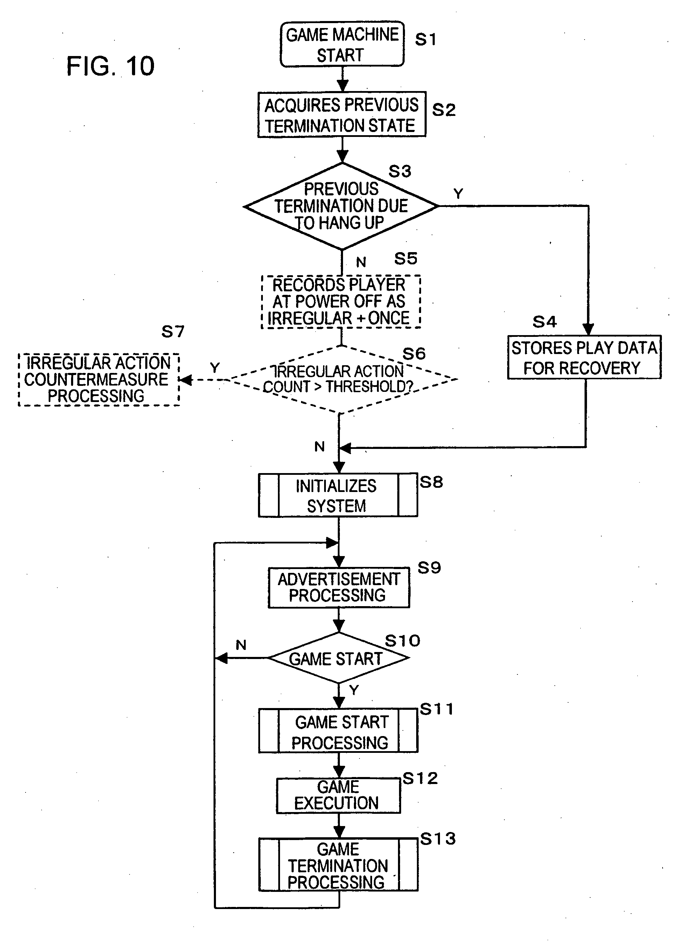

Fig. 10 is a diagram depicting the general flow of the game machine system.

When the power of the game machine is turned ON, the game machine main board 1 and the game machine sub-board 2 are started up (step S1). The main CPU 10 of the game device main board 1 acquires the previous termination state information (step S2). As the termination state information, the life count and the copy count stored in the shared nonvolatile memory 21 are acquired (step S2, see Fig. 8).

Based on the acquired life count and the copy count, the original life count and the copy count are determined using the judgment standard for the life count and the copy count respectively if the counts are multiplexed (example in Fig. 8).

Using the determined life count and the copy count, it is judged whether the previous termination was caused by a hang up (step S3). If the difference of the life count and the copy count is one or more, it is judged as a termination caused by a hang up according to the principle of the present invention, and if there is no difference between the life count and the copy count and the life count and the copy count are identical, then it is judged that the power was shut OFF due to an irregular action by a player.

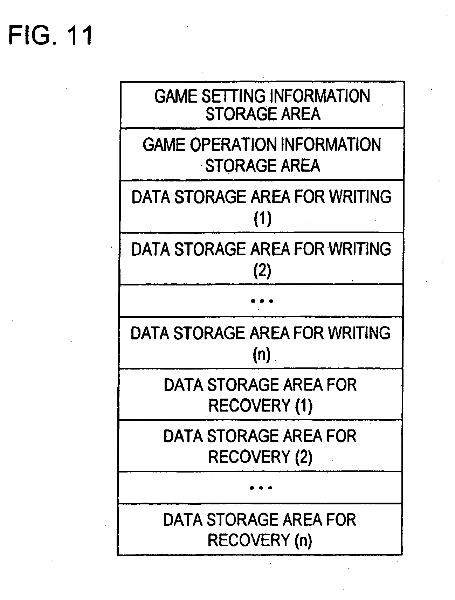

In Fig. 10, if it is judged that the previous termination was due to a hang up (step S3, Y), the recovery data of the play data stored in the nonvolatile memory 11 dedicated to the main CPU 10 is saved (step S4). Fig. 11 is an example of play data recorded in the nonvolatile memory 11 dedicated to the main CPU 10, and the recovery data means saving the data recorded in the recovery data storage area without deleting it.

If it is judged that the previous termination is due to power OFF by an intentional irregular action of a player (step S3, N), on the other hand, the irregular action of the player + once, for example, is recorded (step S5). If the irregular action count does not exceed a threshold (step S6, N), the restart of the game is enabled, and if the irregular action count exceeds a threshold (step S6, Y), irregular action countermeasure processing (step S7) is executed.

Various handlings are possible for the irregular action countermeasure processing (step S7), such as decreasing the ranking of the player data in a network game for a predetermined amount, and rejecting continuation of a game.

Here the player information is not stored in the game machine where an intentional irregular shut off is performed, but in the arcade management device, which is not illustrated, connected to the arcade hub 102 of the arcade or the data server 121 of the data center 120. This player information can include the irregular action count of the player who committed an intentional irregular action.

In this case, even if the player who committed an irregular action moves to another game machine and attempts to restart the game, a previous irregular action can easily be recognized by checking before starting the game. Therefore in this case as well, game execution of a player who committed an intentional irregular action can be rejected or penalized in an achievement record so as to insure fairness to other players.

If a restart of the game is possible (step S6, N), the system is initialized (step S8). Here an initializing the system refers to synchronizing the game machine main board 1 and the game machine sub-board 2, and starting the counting of the life count and the copy count.

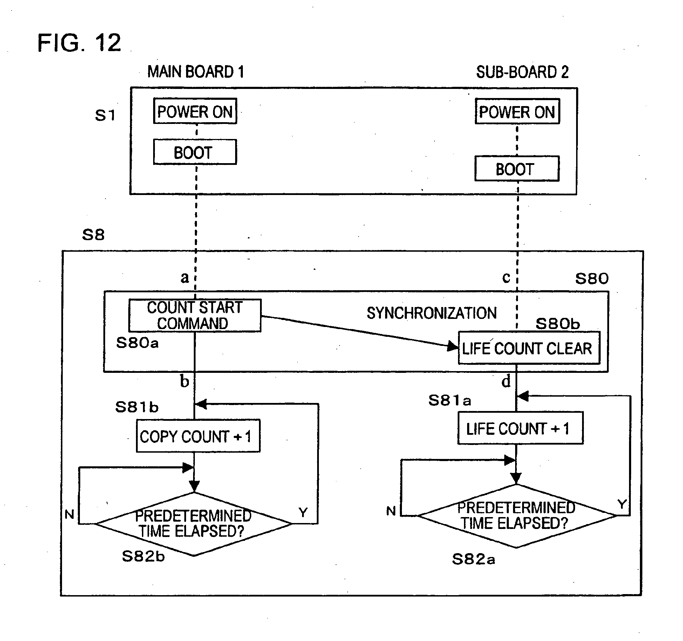

One possible method is the method shown in Fig. 12. In other words, as the synchronization processing (step S80), a count start command is sent from the main CPU 10 of the game machine main board 1 to the game machine sub-board 2 (step S80a). By this, the sub-CPU 20 of the game machine sub-board 2 clears the life count (step S80b).

After the life count is cleared, the sub-CPU 20 increments the life count by "1" at each predetermined time (e.g. at each one second) (steps S81a and 82a).

Corresponding to this, the main CPU 10 acquires the copy count at each predetermined time based on the life count (steps S81b and 82b).

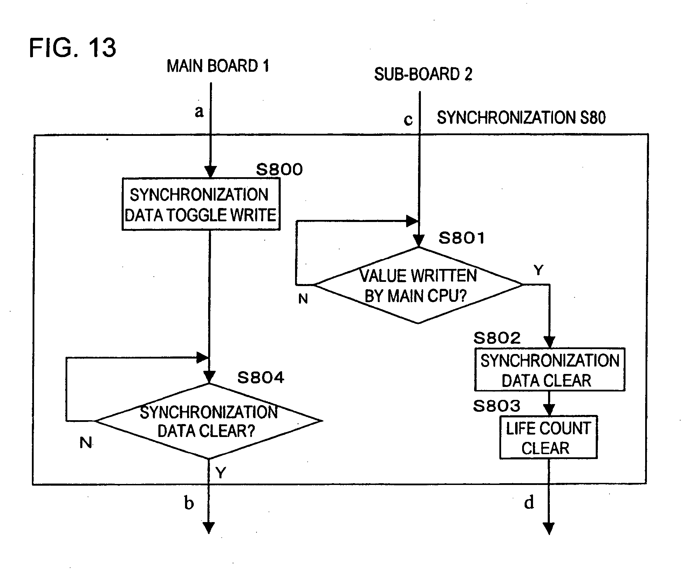

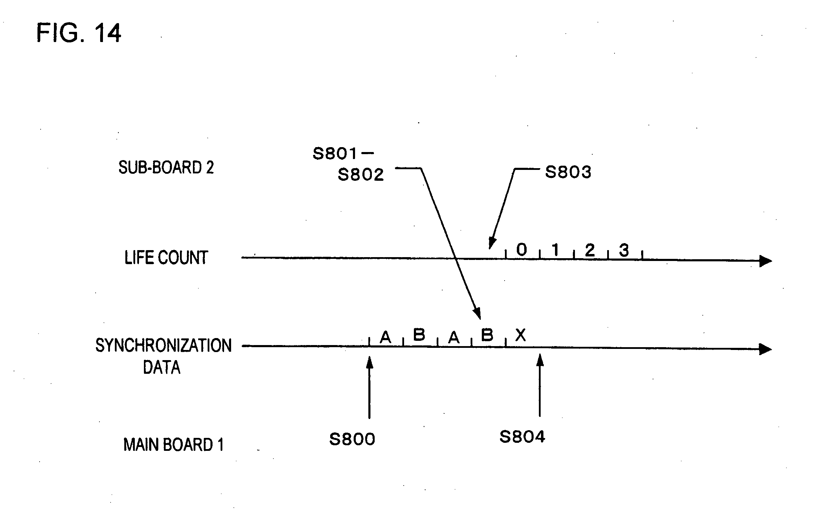

Fig. 13 is a flow chart depicting another method of the synchronization processing (step S80) in Fig. 12, and the synchronization is performed on the nonvolatile memory. Fig. 14 is a sequence diagram corresponding to Fig. 13.

After start up, the game machine main board 1 acquires and confirms the life count and the copy count (step S2: Fig. 10), and when this ends, the game machine main board 1 starts toggling the synchronization data with a predetermined interval (millisecond order) in order to notify the end of acquisition of information of the life count and the copy count to the game machine sub-board 2 (step 800). For example, 55h, AAh, 55h, AAH ... is performed.

After start up, the game machine sub-board 2 waits for the synchronization data to change while maintaining the life count in a state before startup (step S801). When the synchronization data is changed (step S801, Y), the game machine sub-board 2 clears the synchronization data to notify the change of the synchronization data to 11 (step S802). For clear, any value, other than the values which the game machine main board 1 is toggling, can be used. For example, the synchronization data is cleared to "0".

After this, the life count is cleared to "0" (step S803), and regular count up of the life count is started. The game machine main board 1 detects that the synchronization data, which has been toggled, is cleared (step S804, Y), and starts regular copying of the life count.

This count up (incrementing) processing of the life count by the sub-CPU 20 of the game machine sub-board 2 and the copy count acquisition processing by the main CPU 10 of the game machine main board 1 are continued at least as long as the game machine is operating normally. If the power of the game machine is shut OFF due to a hang up or to irregular action of a player, processing based on the comparison of the life count and the copy count, which is the characteristic of the present invention described above, is performed.

Referring back to Fig. 10, when the system initialization (step S8) ends, as mentioned above, normal game machine processing is performed. In other words, an advertisement processing to display an advertisement screen on a display screen, which is not illustrated, of the game machine, is executed (step S9). If a player instructs for the start of the game (step S10, Y), game start processing is performed (step S11), and game execution is enabled (step S12). If game termination is instructed, game termination processing is performed (step S13), and advertisement processing (step S9) is performed again.

From advertisement processing (step S9) to game termination processing (step S13) are not directly related to the present invention, so further description is omitted.

### INDUSTRIAL APPLICABILITY

By applying the present invention, the cause of a restart can be easily identified, whether the cause is by an intentional irregular action of a player or by a hang up, so fairness to other players participating in a network game can be insured when the restart is due to an intentional irregular action of a player, and diminishing enthusiasm to participate in a game can be prevented.

## Claims

1. A game machine for executing a game program controlled by a computer, comprising:
a first control unit (10) powered by a common power unit (4), controlling execution of a game program installed in a ROM (12);
a second control unit (20) powered by the common power unit (4), continually incrementing a count value in a progressing process of the game program executed by the first control unit (10);
a first non-volatile memory area storing the count value incremented by the second control unit (20) as a life count; and
a second non-volatile memory area storing a count value acquired by the first control unit (10) as a copy of the life count,
wherein the first control unit (10) compares the life count stored in the first non-volatile memory area and the copy count stored in the second non-volatile memory area at restart, and judges that power is shut OFF as a result of an irregular action of a player before the restart, if the life count and the copy of the life count are the same.

2. A game machine according to claim 1, further comprising a managing unit (102a) managing the power shut OFF and a player, wherein
when judgment is made that the power is shut OFF as a result of an irregular action of the player, the management unit controls the player to limit execution of the game.

3. A game machine according to claim 1 or 2, wherein the first non-volatile memory area and the second non-volatile memory area are provided in a common non-volatile memory (21).

4. A game machine according to any preceding claim, wherein the first non-volatile memory area and the second non-volatile memory area have respective multiplexed areas, and the same life count and copy count are respectively written in the multiplexed areas.

5. A game machine according to claim 4, wherein if the multiplexed area is a triplexed area and values written in two or more areas of the multiplexed area are the same, then the same value is regarded as the original life count and copy count multiplexed.

6. A game machine according to Claim 5, wherein if values written in the two or more areas are not the same, and if the difference of a first value written in a first rank order and a third value written in a third rank order is "1", then the first value or the third value is regarded as the original life count and copy count.

7. A game machine system, comprising a plurality of game machines (104A-N), and a management device (102a) managing power OFF and player information of the plurality of game machines, in which each of the plurality of game machines (104A-N) comprises:
a first control unit powered by a common power unit (4), controlling the execution of a game program;
a second control unit (20) powered by the common power unit (4) continuing to increment a count value in a progressing process of the game program executed by the first control unit (10);
a first non-volatile memory area storing the count value incremented by the second control unit (20) as a life count; and
a second non-volatile memory area storing a count value acquired by the first control unit (10) based on the life count as a copy of the life count, and wherein
the first control unit (10) compares the life count stored in the first non-volatile memory area and the copy count stored in the second non-volatile memory area and judges that the power is shut OFF as a result of an irregular action of a player before the restart, if the life count and the copy count are the same, and
the management device (102a) holds information of the player who committed the irregular action thus judged, and controls the player to limit execution of the game on another game machine.

8. A game machine system according to Claim 7, wherein
the management device (102a) comprises a data center (120) connected via a network (110), and
the data center (120) comprises a data base (121) holding information on players who execute a game, and acquires information on a player who committed an irregular action on the plurality of game machines (104A-N), which is transmitted via the management device, and registers the information in the data base (121).

9. A method for detecting an irregular action of a player, comprising the following steps:
continuing to increment a count value by a second control unit powered by a common power unit (4), in a progressing process of a game program which is controlled for execution by a first control unit powered by the common power unit (4);
storing a count value incremented by the second control unit in a first non-volatile memory area as a life count;
acquiring a count value by the first control unit (10) based on the life count;
storing the count value acquired by the first control unit (10) in a second non-volatile memory area as a copy of the life count;
comparing the life count stored in the first non-volatile memory area and the copy count stored in the second non-volatile memory area at restart; and
judging that the power was shut OFF as a result of an irregular action of a player before the restart if the life count and copy count are the same.

10. A program stored in a storage medium readable in a game machine, for detecting an irregular action of a player when the program is executed, the program causing the game machine to perform the steps of:
continuing to increment a count value by a second control unit (20) powered by the common power unit (4) in a progressing process of a game program which is controlled for execution by a first control unit (10) powered by the common power unit (4);
storing a count value incremented by the second control unit (20) in a first non-volatile memory area as a life count;
acquiring a count value by the first control unit (10) based on the life count;
storing the count value acquired by the first control unit in a second non-volatile memory area as a copy of the life count;
comparing by the first control unit (10) the life count stored in the first non-volatile memory area and the copy count stored in the second non-volatile memory area at restart; and
judging by the first control unit (10) that the power is shut OFF due to an irregular action of a player before the restart if the life count and copy count are the same.

## Patentansprüche

1. Spielmaschine zum Ausführen eines Spielprogramms, das von einem Computer gesteuert wird, umfassend:
eine erste Steuereinheit (10), die von einer gemeinsamen Stromversorgungseinheit (4) mit Strom versorgt wird und das Ausführen eines Spielprogramms steuert, das in einem ROM (12) installiert ist;
eine zweite Steuereinheit (20), die von der gemeinsamen Stromversorgungseinheit (4) mit Strom versorgt wird und kontinuierlich einen Zählerstand in einer fortschreitenden Prozedur des Spielprogramms erhöht, das von der ersten Steuereinheit (10) ausgeführt wird;
einen ersten Bereich in einem nicht flüchtigen Speicher, in dem der Zählerstand gespeichert ist, den die zweite Steuereinheit (20) erhöht, und zwar als Lebenszähler; und
einen zweiten Bereich in einem nicht flüchtigen Speicher, in dem ein Zählerstand gespeichert ist, den die erste Steuereinheit (10) erfasst, und zwar als Kopie des Lebenszählers,
wobei die erste Steuereinheit (10) den im ersten nicht flüchtigen Speicherbereich abgelegten Lebenszähler und den im zweiten nicht flüchtigen Speicherbereich hinterlegten kopierten Zähler beim Neustart vergleicht, und feststellt, dass die Stromversorgung durch eine regelwidrige Handlung eines Spielers vor dem Neustart unterbrochen wurde, falls der Lebenszähler und die Kopie des Lebenszählers übereinstimmen.

2. Spielmaschine nach Anspruch 1, zudem umfassend eine Verwaltungseinheit (1 02a), die das Abschalten der Stromversorgung und einen Spieler verwaltet, wobei
wenn festgestellt wird, dass die Stromversorgung durch eine regelwidrige Handlung des Spielers unterbrochen wurde, die Verwaltungseinheit den Spieler kontrolliert, damit die Ausführung des Spiels beschränkt wird.

3. Spielmaschine nach Anspruch 1 oder 2, wobei der erste nicht flüchtige Speicherbereich und der zweite nicht flüchtige Speicherbereich in einem gemeinsamen nicht flüchtigen Speicher (21) vorhanden sind.

4. Spielmaschine nach irgendeinem vorhergehenden Anspruch, wobei der erste nicht flüchtige Speicherbereich und der zweite nicht flüchtige Speicherbereich jeweilige gemultiplexte Bereiche aufweisen, und der gleiche Lebenszähler und der kopierte Zähler jeweils in die gemultiplexten Bereiche geschrieben werden.

5. Spielmaschine nach Anspruch 4, wobei, wenn der gemultiplexte Bereich ein getriplexter Bereich ist und die in die zwei oder mehr Bereiche des gemultiplexten Bereichs geschriebenen Werte gleich sind, der gleiche Wert als originaler Lebenszähler und als gemultiplexter kopierter Zähler angesehen wird.

6. Spielmaschine nach Anspruch 5, wobei, wenn die in die zwei oder mehr Bereiche geschriebenen Werte nicht gleich sind, und wenn die Differenz eines ersten Werts, der in einer ersten Rangfolge geschrieben ist, und eines dritten Werts, der in einer dritten Rangfolge geschrieben ist, "1" ist, der erste Wert oder der dritte Wert als originaler Lebenszähler und als kopierter Zähler angesehen wird.

7. Spielmaschinensystem, umfassend eine Anzahl von Spielmaschinen (104A-N), und eine Verwaltungseinheit (102a), die das Abschalten der Stromversorgung und Spielerinformation für die Spielmaschinen verwaltet, wobei jede Spielmaschine der Anzahl Spielmaschinen (104A-N) umfasst:
eine erste Steuereinheit, die von einer gemeinsamen Stromversorgungseinheit (4) versorgt wird und das Ausführen eines Spielprogramms steuert;
eine zweite Steuereinheit (20), die von einer gemeinsamen Stromversorgungseinheit (4) versorgt wird und kontinuierlich einen Zählerstand in einer fortschreitenden Prozedur des Spielprogramms erhöht, das von der ersten Steuereinheit (10) ausgeführt wird;
einen ersten Bereich in einem nicht flüchtigen Speicher, in dem der Zählerstand gespeichert ist, den die zweite Steuereinheit (20) erhöht, und zwar als Lebenszähler; und
einen zweiten Bereich in einem nicht flüchtigen Speicher, in dem ein Zählerstand gespeichert ist, den die erste Steuereinheit (10) erfasst, und zwar abhängig vom Lebenszähler als Kopie des Lebenszählers,
wobei:
die erste Steuereinheit (10) den im ersten nicht flüchtigen Speicherbereich abgelegten Lebenszähler und die im zweiten nicht flüchtigen Speicherbereich hinterlegte Kopie des Zählers vergleicht, und feststellt, dass die Stromversorgung durch eine regelwidrige Handlung eines Spielers vor dem Neustart unterbrochen wurde, falls der Lebenszähler und die Kopie des Zählers übereinstimmen, und
die Verwaltungseinheit (102a) Information über den Spieler hält, der die auf diese Weise festgestellte regelwidrige Handlung begangen hat, und den Spieler kontrolliert, um die Ausführung des Spiels auf einer anderen Spielmaschine zu beschränken.

8. Spielmaschinensystem nach Anspruch 7, wobei:
die Verwaltungsvorrichtung (102a) ein Datenzentrum (120) umfasst, das über ein Netzwerk (110) verbunden ist, und
das Datenzentrum (120) eine Datenbank (121) umfasst, die Information über Spieler enthält, die ein Spiel ausführen, und Information über einen Spieler erfasst, der eine regelwidrige Handlung auf einer der Anzahl von Spielmaschinen (104A-N) begangen hat, wobei die Information über die Verwaltungsvorrichtung übertragen wird, und die Information in der Datenbank (121) registriert wird.

9. Verfahren zum Erfassen einer regelwidrigen Handlung eines Spielers, umfassend die folgenden Schritte:
das kontinuierliche Erhöhen eines Zählerstands durch eine zweite Steuereinheit, die von einer gemeinsamen Stromversorgungseinheit (4) mit Strom versorgt wird, in einer fortschreitenden Prozedur eines Spielprogramms, das für die Ausführung von einer ersten Steuereinheit gesteuert wird, die von der gemeinsamen Stromversorgungseinheit (4) versorgt wird;
das Speichern eines Zählerstands, den die zweite Steuereinheit inkrementiert, in einem ersten Bereich eines nicht flüchtigen Speichers als Lebenszähler;
das Erfassen eines Zählerstands durch die erste Steuereinheit (10) abhängig vom Lebenszähler;
das Speichern des von der ersten Steuereinheit (10) erfassten Zählerstands in einem zweiten Bereich eines nicht flüchtigen Speichers als Kopie des Lebenszählers;
das Vergleichen des im ersten nicht flüchtigen Speicherbereich abgelegten Lebenszählers mit dem im zweiten nicht flüchtigen Speicherbereich abgelegten kopierten Zähler beim Neustart; und
das Feststellen, dass die Stromversorgung vor dem Neustart durch eine regelwidrige Handlung des Spielers unterbrochen wurde, wenn der Lebenszähler und der kopierte Zähler übereinstimmen.

10. Programm, das in einem Speichermedium gespeichert ist, das in einer Spielmaschine gelesen werden kann und dem Feststellen einer regelwidrigen Handlung eines Spielers dient, wenn das Programm ausgeführt wird, wobei das Programm die Spielmaschine veranlasst, die folgenden Schritte auszuführen:
das kontinuierliche Erhöhen eines Zählerstands durch eine zweite Steuereinheit (20), die von einer gemeinsamen Stromversorgungseinheit (4) mit Strom versorgt wird, in einer fortschreitenden Prozedur eines Spielprogramms, das für die Ausführung von einer ersten Steuereinheit (10) gesteuert wird, die von der gemeinsamen Stromversorgungseinheit (4) versorgt wird;
das Speichern eines Zählerstands, den die zweite Steuereinheit (20) inkrementiert, in einem ersten Bereich eines nicht flüchtigen Speichers als Lebenszähler;
das Erfassen eines Zählerstands durch die erste Steuereinheit (10) abhängig vom Lebenszähler;
das Speichern des von der ersten Steuereinheit erfassten Zählerstands in einem zweiten Bereich eines nicht flüchtigen Speichers als Kopie des Lebenszählers;
durch die erste Steuereinheit (10) das Vergleichen des im ersten nicht flüchtigen Speicherbereich abgelegten Lebenszählers mit dem im zweiten nicht flüchtigen Speicherbereich abgelegten kopierten Zähler beim Neustart; und
durch die erste Steuereinheit (10) das Feststellen, dass die Stromversorgung vor dem Neustart durch eine regelwidrige Handlung des Spielers unterbrochen wurde, wenn der Lebenszähler und der kopierte Zähler übereinstimmen.

## Revendications

1. Machine de jeu pour exécuter un programme de jeu commandé par un ordinateur, comprenant :
une première unité de commande (10) alimentée par une unité de puissance commune (4), contrôlant l'exécution d'un programme de jeu installé dans une ROM (12) ;
une deuxième unité de commande (20) alimentée par l'unité de puissance commune (4), incrémentant continuellement une valeur de comptage dans un processus en progression d'un programme de jeu exécuté par la première unité de commande (10) ;
une première zone de mémoire non volatile stockant la valeur de comptage incrémentée par la deuxième unité de commande (20) comme un compte de vie ; et
une deuxième zone de mémoire non volatile stockant une valeur de acquise par la première unité de commande (10) comme une copie du compte de vies,
où la première unité de commande (10) compare le compte de vies stocké dans la première zone de mémoire non volatile et le compte de copies stocké dans la deuxième zone de mémoire non volatile au moment du redémarrage, et établit que la puissance est COUPEE par suite d'une action irrégulière d'un joueur avant le redémarrage, si le compte de vies et la copie du compte de vies sont les mêmes.

2. Machine de jeu selon la revendication 1, comprenant en outre une unité de gestion (102a) gérant la COUPURE de puissance et un joueur, où
lorsqu'il est établi que la puissance est COUPEE par suite d'une action irrégulière du joueur, l'unité de gestion commande au joueur de limiter l'exécution du jeu.

3. Machine de jeu selon la revendication 1 ou 2, dans laquelle la première zone de mémoire non volatile et la deuxième zone de mémoire non volatile sont réalisées dans une mémoire non volatile commune (21).

4. Machine de jeu selon l'une quelconque des revendications précédentes, dans laquelle la première zone de mémoire non volatile et la deuxième zone de mémoire non volatile ont des zones multiplexées respectives, et le même compte de vies et compte de copies sont respectivement inscrites dans les zones multiplexées.

5. Machine de jeu selon la revendication 4, dans laquelle, si la zone multiplexée est une zone triplexée et que les valeurs écrites dans deux ou plusieurs zones de la zone multiplexée sont les mêmes, alors la même valeur est considérée comme le compte de vies initial et le compte de copies multiplexés.

6. Machine de jeu selon la revendication 5, dans laquelle, si les valeurs écrites dans les deux ou plusieurs zones ne sont pas les mêmes, et si la différence d'une première valeur écrite selon un premier ordre de rang et une troisième valeur écrite selon un troisième ordre de rang est "1", alors la première valeur ou la troisième valeur est considérée comme compte de vies et compte de copies initiaux.

7. Système de machine de jeu, comprenant une pluralité de machines de jeu (104A-N), et un dispositif de gestion (102a) gérant la COUPURE de puissance et l'information du joueur de la pluralité de machines de jeu, où chacune de la pluralité de machines de jeu (104A-N) comprend :
une première unité de commande alimentée par une unité de puissance commune (4), contrôlant l'exécution d'un programme de jeu ;
une deuxième unité de commande (20) alimentée par l'unité de puissance commune (4) continuant à incrémenter une valeur de comptage dans un processus en progression du programme de jeu exécuté par la première unité de commande (10) ;
une première zone de mémoire non volatile stockant la valeur de comptage incrémentée par la deuxième unité de commande (20) comme compte de vies ; et
une deuxième zone de mémoire non volatile stockant une valeur de comptage acquise par la première unité de commande (10) sur la base du compte de vies en tant que copie du compte de vies, et où
la première unité de commande (10) compare le compte de vies stocké dans la première zone de mémoire non volatile et le compte de copies stocké dans la deuxième zone de mémoire non volatile et établit que la puissance est COUPEE par suite d'une action irrégulière d'un joueur avant le redémarrage, si le compte de vies et le compte de copies sont les mêmes, et
le dispositif de gestion (102a) retient l'information du joueur qui a commis l'action irrégulière ainsi établie, et commande au joueur de limiter l'exécution du jeu sur une autre machine de jeu.

8. Système de machine de jeu selon la revendication 7, dans lequel
le dispositif de gestion (102a) comprend un centre de données (120) connecté par un réseau (110), et
le centre de données (120) comprend une base de données (121) retenant des informations sur des joueurs qui exécutent un jeu, et acquiert des informations sur un joueur qui a commis une action irrégulière sur la pluralité de machines de jeu (104A-N), qui sont transmises via le dispositif de gestion, et enregistre les informations dans la base de données (121).

9. Procédé de détection d'une action irrégulière d'un joueur, comprenant les étapes suivantes :
continuer à incrémenter une valeur de comptage par une deuxième unité de commande alimentée par une unité de puissance commune (4), dans un processus en progression d'un programme de jeu dont l'exécution est contrôlée par une première unité de commande alimentée par l'unité de puissance commune (4) ;
stocker une valeur de comptage incrémentée par la deuxième unité de commande dans une première zone de mémoire non volatile comme un compte de vies ;
acquérir une valeur de comptage par la première unité de commande (10) sur la base du compte de vies ;
stocker la valeur de comptage acquise par la première unité de commande (10) dans une deuxième zone de mémoire non volatile en tant que copie du compte de vies ;
comparer le compte de vies stocké dans la première zone de mémoire non volatile et le compte de copies stocké dans la deuxième zone de mémoire non volatile lors du redémarrage ; et
établir que la puissance a été COUPEE par suite d'une action irrégulière d'un joueur avant le redémarrage si le compte de vies et le compte de copies sont les mêmes.

10. Programme stocké dans un support de stockage lisible dans une machine de jeu, pour détecter une action irrégulière d'un joueur lorsque le programme est exécuté, le programme amenant la machine de jeu à exécuter les étapes de :
continuer à incrémenter une valeur de comptage par une deuxième unité de commande (20) alimentée par l'unité de puissance commune (4) dans un processus en progression d'un programme de jeu dont l'exécution est contrôlée par une première unité de commande (10) alimentée par l'unité de puissance commune (4) ;
stocker une valeur de comptage incrémentée par la deuxième unité de commande (20) dans une première zone de mémoire non volatile comme un compte de vies ;
acquérir une valeur de comptage par la première unité de commande (10) sur la base du compte de vies ;
stocker la valeur de comptage acquise par la première unité de commande dans une deuxième zone de mémoire non volatile en tant que copie du compte de vies ;
comparer par la première unité de commande (10) le compte de vies stocké dans la première zone de mémoire non volatile et le compte de copies stocké dans la deuxième zone de mémoire non volatile lors que redémarrage ; et
établir par la première unité de commande (10) que la puissance est COUPEE en raison d'un action irrégulière d'un joueur avant le redémarrage si le compte de vies et le compte de copies sont les mêmes.
